# EUROPÄISCHE PATENTSCHRIFT

(11) **EP 3 225 567 B1**
(45) Veröffentlichungstag und Bekanntmachung des Hinweises auf die Patenterteilung: **14.11.2018**
(21) Anmeldenummer: 17162261.6
(22) Anmeldetag: 22.03.2017
(51) Int. Cl.: B65D 81/20, A23B 4/16

(54) **SCHUTZGAS ZUM VERPACKEN VON FLEISCHWAREN**
INERT GAS FOR PACKAGING MEAT PRODUCTS
GAZ DE PROTECTION POUR LE CONDITIONNEMENT DE VIANDE

(30) Priorität: 29.03.2016 DE 102016003786
(43) Veröffentlichungstag der Anmeldung: 04.10.2017
(73) Patentinhaber: Messer Austria GmbH, 2352 Gumpoldskirchen (AT)
(72) Erfinder: LAIMER, Walter, 7210 Mattersburg (AT)
(74) Vertreter: Münzel, Joachim R.

(56) Entgegenhaltungen:
- DE-A1-102006 000 625
- GB-A- 2 330 815
- US-A1- 2003 049 854

## Beschreibung

Die Erfindung betrifft ein Schutzgas zum Verpacken von Fleischwaren unter modifizierter Atmosphäre sowie ein Verfahren zum Haltbarmachen verpackter Fleischwaren.

Es ist seit langem bekannt, Lebensmittel zur Verlängerung der Haltbarkeit in gasdichten Verpackungen unter einer Schutzgasatmosphäre (auch "modifizierte Atmosphäre" genannt) zu lagern. Durch die Schutzgasatmosphäre werden mikrobiologische, enzymatische biochemische und negative physikalische Prozesse, die zum raschen Verderben der Waren führen, verlangsamt oder gar gestoppt. Üblicherweise kommen als Schutzgase dabei Gasgemische aus Kohlendioxid und Stickstoff zum Einsatz. Kohlendioxid wirkt inhibierend auf das Wachstum von Mikroorganismen, wie Bakterien und Pilzen, während Stickstoff vorwiegend als Stützgas dient, um das Kollabieren der Verpackung zu verhindern. Darüber hinaus ist eine zusätzliche Kühllagerung bei einer Temperatur zwischen ca. 1°C und ca. 7°C hilfreich, um die Haltbarkeit der Lebensmittel zu verlängern.

In der DE 10 2006 000 625 A1 wird eine Schutzgaszusammensetzung beschrieben, die insbesondere zum Haltbarmachen von Gemüse, Obst und Salaten vorgesehen ist. Das dort beschriebene Schutzgas besteht aus einem Vierkomponentengemisch, umfassend Anteile von Stickstoff, Sauerstoff, Kohlendioxid und mindestens einem Edelgas, insbesondere Argon, Xenon und/oder Krypton. Mit diesem Gemisch soll die Seneszenz (Zellzersetzung), die bei pflanzlichen Zellen insbesondere durch Ethylen, Licht oder erhöhten Temperaturen gefördert wird, vermieden oder hinausgezögert werden. Derartige Schutzgase eigenen sich gut zur Lagerung von pflanzlichen Produkten, wie beispielsweise Obst und Gemüse; für die Haltbarmachung von Fleisch- oder Wurstwaren sind sie hingegen nicht geeignet.

Zum Verpacken von Fleisch, insbesondere Frischfleisch, verarbeitetem oder gekochtem Fleisch kamen bereits Gasgemische zum Einsatz, die aus Sauerstoff und Kohlendioxid bestehen. Bekannte Schutzgasgemische beinhalten beispielsweise 60 Vol.-% bis 80 Vol.-% Sauerstoff, Rest Kohlendioxid. Ein hoher Sauerstoffgehalt dient dabei dazu, die wertbestimmende rote Farbe von Fleisch und Fleischprodukten zu stabilisieren, da eine sauerstoffangereicherte Schutzatmosphäre die Bildung von Oxymyoglobin begünstigt, wodurch eine frisch und natürlich wirkende Fleischfarbe hervorgerufen wird. Allerdings wurde bislang beim Einsatz stark sauerstoffhaltiger Schutzgase die Gefahr gesehen, dass der Sauerstoff zu einem beschleunigten Wachstum von Mikroorganismen und somit zu einer Reduzierung der Haltbarkeitsdauer führt, ohne dass eine solche für den Konsumenten durch einen optisch wahrnehmbaren Verfall des Produkts erkennbar wäre. Auch verlieren Fleisch- und Wurstwaren bei Lagerung unter stark sauerstoffhaltigen Schutzgasgemischen aufgrund einer erhöhten Fettoxidation rasch an Zartheit und Saftigkeit und damit zu einer Abflachung des Fleischaromas, sodass aus diesen Gründen ein zu hoher Sauerstoffanteil als nachteilig angesehen wurde.

Aus diesem Grunde wurden Gasmischungen vorgeschlagen, die einen gegenüber den bekannten Standardgemischen zumindest reduzierten Sauerstoffgehalt aufweisen und dennoch über einen möglichst langen Zeitraum eine ansprechende Färbung des Fleisches aufrechterhalten. Anstelle von Sauerstoff kommt bei diesen Gasgemischen Argon zum Einsatz. So ist aus der GB 2330815 A1 ein Schutzgas zum Verpacken von Fleisch, insbesondere rohem oder gekochtem Fleisch bekannt, das einen bestimmenden Anteil von Argon von mindestens 45 Vol.-% und bis zu 90 Vol.-% enthält. Der restliche Anteil besteht aus Sauerstoff und/oder Kohlendioxid. Der hohe Anteil an Argon und ggf. Kohlendioxid soll einerseits einer Verfärbung des Fleisches vorbeugen und andererseits eine lange Haltbarkeitsdauer gewährleisten, indem die oxidierenden Eigenschaften des Gasgemisches reduziert werden.

In der EP 2 586 315 A2 wird ein Schutzgas zum Verpacken von Fleisch oder Wurstwaren beschrieben, das auf Sauerstoff vollständig verzichtet. Das dort vorgeschlagene Schutzgasgemisch besteht aus 40 Vol.-% bis 80 Vol.-% Argon, 20 Vol.-% bis 40 Vol.-% Kohlendioxid, Rest Stickstoff. Der hohe Argonanteil dient bei diesem Gegenstand dazu, die ungünstige Verfärbung des Fleisches, die sogenannte Vergrauung, hinauszuzögern.

Gleichwohl kommt es beim Einsatz der aus dem Stande der Technik bekannten Gasgemische innerhalb weniger Tage bereits zu einer Änderung von Farbe und Geruch der verpackten Ware, was eine Minderung der sensorischen Qualität der Lebensmittel bedeutet.
Es ist daher Aufgabe der vorliegenden Erfindung, ein alternatives Schutzgas zum Verpacken von Fleisch- oder Wurstwaren unter modifizierter Atmosphäre zu schaffen, das die Minderung der sensorischen Qualität der Fleisch- bzw. Wurstwaren verzögert und das zugleich eine hohe Haltbarkeitsdauer der verpackten Produkte gewährleistet.
Gelöst ist diese Aufgabe durch ein Schutzgas zum Verpacken von Fleisch oder Wurstwaren unter modifizierter Atmosphäre mit den Merkmalen des Patentanspruchs 1.
Das erfindungsgemäß als Schutzgas zum Verpacken von Fleisch, insbesondere von Frischfleisch und Frischfleischprodukten zum Einsatz kommende Gasgemisch weist also eine Anteil von 50 Vol.-% bis 80 Vol.-%, Sauerstoff, einen Anteil von 20 Vol.-% bis 45 Vol.-%, bevorzugt 20 Vol.-% bis 40 Vol.-%, Argon und einem restlichen Anteil von Kohlendioxid auf. Der Kohlendioxidgehalt des erfindungsgemäßen Schutzgases sollte dabei mindestens 5 Vol.-%, bevorzugt aber über 10 Vol.-% betragen, weil ansonsten die Unterdrückung der mikrobiologischen Aktivität nachlässt und somit die Haltbarkeitsdauer der Fleisch- bzw. Wurstwaren reduziert wird. Bevorzugt beträgt der Kohlendioxidanteil zwischen 20 Vol.-% und 30 Vol.-%.
Es hat sich überraschend gezeigt, dass ein hoher Gehalt an Sauerstoff im Schutzgas von mindestens 50 Vol.-%, nicht nur die ansprechende Fleischfärbung über einen längeren Zeitraum erhält, sondern zudem insgesamt zu einer Reduzierung der Gesamtkeimzahl im Fleisch führt. Insbesondere wird das Wachstum von anaeroben sowie mikroaerophilen Keimen, wie etwa Campylobakter, deutlich gemindert. Damit ergänzt der Sauerstoff die mikrobiostatische Wirkung des Kohlendioxids, die insbesondere das Wachstum aerober Keime hemmt. Das Wachstum von Bakterien und Pilzen wird somit in einem weiten Spektrum wirkungsvoll unterdrückt.

Zugleich werden durch den Anteil von bis zu 45 Vol.-% Argon im Schutzgas enzymatische Reaktionen an der Produktoberfläche deutlich verringert, wodurch die sensorische Qualität des Fleisches über einen langen Zeitraum erhalten werden kann. Zudem verstärkt Argon den mikrobiostatischen Effekt des Kohlendioxids, weshalb ein hoher Anteil an Argon von über 30 Vol.-% besonders dann vorteilhaft ist, wenn auch der Kohlendioxidanteil hoch ist, also beispielsweise über 15 Vol.-% oder über 20 Vol.-% beträgt. Insbesondere der Argonanteil im Schutzgas vermindert die durch enzymatische Reaktionen ausgelöste Vergrauung des Produkts und führt damit gemeinsam mit dem Sauerstoff zu einem auch noch nach Tagen anhaltenden ansprechenden Äußeren und frischen Geschmack. Die beschriebenen positiven Wirkungen des Argons steigern sich mit zunehmendem Argonanteil, jedoch sinkt mit abnehmendem Kohlendioxidanteil die hemmende Wirkung des Schutzgases auf die mikrobiologische Aktivität. Somit sollten die Anteile von Argon und Kohlendioxid jeweils über 20 Vol.-% betragen, beide Anteile sollten jedoch jeweils den Sauerstoffanteil nicht übersteigen, um dessen positive Wirkungen auf Keimanzahl und Aussehen des Fleischprodukts nicht zu beeinträchtigen. Das erfindungsgemäße Schutzgas enthält somit bevorzugt mehr als 50 Vol.-% Sauerstoff, dazu mindestens 20 Vol.-% Argon, und mindestens 20 Vol.-% Kohlendioxid.
Beispiele für erfindungsgemäße Gasmischungen sind:
50 Vol.-% Sauerstoff, 35 Vol.-% Argon, 15 Vol.-% Kohlendioxid
50 Vol.-% Sauerstoff, 30 Vol.-% Argon, 20 Vol.-% Kohlendioxid
50 Vol.-% Sauerstoff, 25 Vol.-% Argon, 25 Vol.-% Kohlendioxid
50 Vol.-% Sauerstoff, 20 Vol.-% Argon, 30 Vol.-% Kohlendioxid
55 Vol.-% Sauerstoff, 25 Vol.-% Argon, 20 Vol.-% Kohlendioxid
55 Vol.-% Sauerstoff, 20 Vol.-% Argon, 25 Vol.-% Kohlendioxid
60 Vol.-% Sauerstoff, 20 Vol.-% Argon, 20 Vol.-% Kohlendioxid
65 Vol.-% Sauerstoff, 20 Vol.-% Argon, 15 Vol.-% Kohlendioxid
70 Vol.-% Sauerstoff, 20 Vol.-% Argon, 10 Vol.-% Kohlendioxid
Das erfindungsgemäße Gasgemisch besteht lediglich aus den drei Komponenten Sauerstoff, Argon und Kohlendioxid. Ein zusätzlicher Anteil Stickstoff in einem somit aus Sauerstoff, Argon, Kohlendioxid und Stickstoff bestehendem quaternären Gemisch ist anmeldungsgemäß jedoch nicht ausgeschlossen. Die Zugabe des lediglich als Stützgas wirkenden Stickstoffs von beispielsweise bis zu 10 Vol.-% ist allerdings lediglich in besonders gelagerten Fällen vorteilhaft.

Die sensorische Qualität des mit dem erfindungsgemäßen Schutzgas verpackten Lebensmittels bleibt über Tage hinweg nahezu unverändert und die Haltbarkeitsdauer des Produkts wird verlängert. Dadurch wird insgesamt auch die Kosteneffizienz des Produkts gesteigert. Die erfindungsgemäße Schutzgasatmosphäre eignet sich insbesondere zum Lagern von Fleisch, insbesondere von Frischfleisch und Frischfleischprodukten, wie beispielsweise Rinder- oder Geflügelfilets.
Die Aufgabe der Erfindung wird auch durch ein Verfahren zum Haltbarmachen von Fleischwaren, insbesondere von Frischfleisch und Frischfleischprodukten gelöst, bei dem die Fleischwaren in einer modifizierten Atmosphäre gelagert werden, die aus einem erfindungsgemäßen Gasgemisch besteht. Insbesondere besitzt die modifizierte Atmosphäre also die Zusammensetzung 50 Vol.-% bis 80 Vol.-%, Sauerstoff, 20 Vol.-% bis 45 Vol.-%, bevorzugt 20 Vol.-% bis 40 Vol.-%, Argon, Rest Kohlendioxid. Der Kohlendioxidgehalt des erfindungsgemäßen Schutzgases sollte dabei mindestens 5 Vol.-%, bevorzugt zwischen 20 Vol.-% und 30 Vol.-% betragen.
Die Verwendung eines erfindungsgemäßen Gasgemisches als Schutzgas zur Lagerung von Fleisch waren unter modifizierter Atmosphäre, insbesondere zur Lagerung von rohem bzw. frischem Fleisch und Frischfleischprodukten, verringert sowohl die Zahl schädlicher aerober, inbesondere mikroaerophiler, sowie anaerober Mikroorganismen als auch die Einwirkungen negativer enzymatischer Reaktionen und sorgt auf diese Weise über einen langen Zeitraum zu einer nahezu gleichbleibend hohen Qualität der Ware. Die nach dem Stande der Technik Schutzgasen mit hohem Sauerstoffgehalt zugeschriebenen negativen Einflüsse auf Geschmack und Konsistenz der verpackten Produkte treten bei einer Lagerung unter dem erfindungsgemäßen Schutzgas nicht oder nur in vermindertem Umfang auf.

## Patentansprüche

1. Schutzgas zum Verpacken von Fleischwaren unter modifizierter Atmosphäre, bestehend aus 50 Vol.-% bis 80 Vol.-% Sauerstoff, 20 Vol.-% bis 45 Vol.-% Argon, Rest Kohlendioxid.

2. Schutzgas nach Anspruch 1, **dadurch gekennzeichnet, dass** der Anteil an Argon im Schutzgas zwischen 20 Vol.-% und 40 Vol.-% beträgt.

3. Schutzgas nach einem der vorhergehenden Ansprüche, **dadurch gekennzeichnet, dass** der Anteil an Kohlendioxid zwischen 20 Vol.-% und 30 Vol.-% beträgt.

4. Verfahren zum Haltbarmachen verpackter Fleischwaren, **dadurch gekennzeichnet, dass** die Fleischwaren in einer modifizierten Atmosphäre gelagert werden, die aus einem Schutzgas nach einem der vorhergehenden Ansprüche besteht.

5. Verwendung eines Schutzgases nach einem der Ansprüche 1 bis 3 zum Verpacken von Frischfleisch oder Frischfleischprodukten.

## Claims

1. Inert gas for packaging meat products under a modified atmosphere, consisting of from 50% by volume to 80% by volume of oxygen, from 20% by volume to 45% by volume of argon, the remainder being carbon dioxide.

2. Inert gas according to Claim 1, **characterized in that** the proportion of argon in the inert gas is between 20% by volume and 40% by volume.

3. Inert gas according to either of the preceding claims, **characterized in that** the proportion of carbon dioxide is between 20% by volume and 30% by volume.

4. Process for preserving packaged meat products, **characterized in that** the meat products are stored in a modified atmosphere consisting of an inert gas according to any of the preceding claims.

5. Use of an inert gas according to any of Claims 1 to 3 for packaging fresh meat or fresh-meat products.

## Revendications

1. Gaz protecteur pour l'emballage de produits à base de viande sous une atmosphère modifiée, constituée par 50 % en volume à 80 % en volume d'oxygène, 20 % en volume à 45 % en volume d'argon, le reste étant du dioxyde de carbone.

2. Gaz protecteur selon la revendication 1, **caractérisé en ce que** la proportion d'argon dans le gaz protecteur est comprise entre 20 % en volume et 40 % en volume.

3. Gaz protecteur selon l'une quelconque des revendications précédentes, **caractérisé en ce que** la proportion de dioxyde de carbone est comprise entre 20 % en volume et 30 % en volume.

4. Procédé de conservation de produits à base de viande emballés, **caractérisé en ce que** les produits à base de viande sont stockés dans une atmosphère modifiée, qui est constituée par un gaz protecteur selon l'une quelconque des revendications précédentes.

5. Utilisation d'un gaz protecteur selon l'une quelconque des revendications 1 à 3 pour l'emballage de viande fraîche ou de produits à base de viande fraîche.
